Europäisches Patentamt

European Patent Office

Office européen des brevets

(11) Numéro de publication: **0 064 454
B1**

(12) **FASCICULE DE BREVET EUROPEEN**

(45) Date de publication du fascicule du brevet:
**24.07.85**

(21) Numéro de dépôt: **82400748.8**

(22) Date de dépôt: **27.04.82**

(51) Int. Cl.⁴: **B 23 K 9/02,** B 23 Q 35/13

(54) Procédé de positionnement latéral d'un organe par rapport à un joint formé entre deux surfaces métalliques et présentant des discontinuités.

(30) Priorité: **30.04.81 FR 8108671**

(43) Date de publication de la demande:
**10.11.82 Bulletin 82/45**

(45) Mention de la délivrance du brevet:
**24.07.85 Bulletin 85/30**

(84) Etats contractants désignés:
**BE DE GB IT SE**

(56) Documents cités:
**EP - A - 0 036 358
GB - A - 1 584 707
US - A - 4 010 346**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Marchal, Paul, Résidence du Parc du Château
de Courcelles 1-13, F-91190 Gif-sur-Yvette (FR)**
Inventeur: **Gil, Pierre, 20, rue du Fond Garant,
F-91440 Bures sur Yvette (FR)**
Inventeur: **Vertut, Jean, 3, rue J.R. Voisembert,
F-92130 Issy Les Moulineaux (FR)**
Inventeur: **Cornu, Jean, 34, Route de Vertou,
F-44200 Nantes (FR)**
Inventeur: **Detriche, Jean-Marie, 38, rue de Tourville,
F-78100 Saint Germain en Laye (FR)**

(74) Mandataire: **Mongrédien, André et al, c/o
BREVATOME 25, rue de Ponthieu, F-75008 Paris (FR)**

## Description

La présente invention concerne un procédé de positionnement latéral d'un organe par rapport à un joint formé entre deux surfaces métalliques et présentant des discontinuités, ainsi qu'un dispositif pour la mise en œuvre de ce procédé.

On connaît du document FR-A-2 107 758 un procédé de positionnement latéral d'un organe par rapport à un joint formé entre deux surfaces métalliques. Selon ce procédé, on utilise les signaux délivrés par deux sondes à courant de Foucault pour asservir l'organe à suivre le joint.

De façon plus précise, l'invention se rapporte au problème du positionnement latéral automatique d'un organe tel qu'une torche de soudage par rapport au joint séparant deux pièces à souder, lorsque ces pièces sont maintenues en position par des joints de soudure réalisés au préalable. Ces points de soudure sont le plus souvent réalisés à la main, de façon aléatoire, de telle sorte que leur espacement et leur forme sont variables. Ces points de soudure constituent donc des discontinuités du joint formé entre les deux pièces, qui sont réparties de façon aléatoire le long du joint.

On conçoit que la présence de ces points de soudure le long du joint séparant les deux pièces à souder risque de perturber le fonctionnement d'une tête de soudage équipée d'un dispositif assurant son positionnement latéral automatique. En effet, le dispositif de positionnement automatique risque de perdre le joint au moment du passage du point de soudure et, donc, de guider la torche de soudage hors de la zone de travail.

Ces risques sont particulièrement importants lorsque le dispositif de positionnement latéral automatique utilise des capteurs électriques du type à courants de Foucault, car ces capteurs réagissent de façon très sensible aux points de soudure qui constituent une discontinuité du joint séparant les surfaces métalliques, c'est-à-dire un court-circuit entre les surfaces des tôles à souder. On ne peut donc pas commander la torche de soudage directement en fonction des informations fournies par les capteurs car cela conduirait à des écarts de position très importants au niveau du passage des points de soudure.

Bien entendu, l'application au soudage de deux tôles n'est pas limitative et l'invention peut être utilisée pour résoudre tout problème de positionnement latéral d'un organe par rapport à un joint formé entre deux surfaces et présentant des discontinuités.

Pour résoudre la difficulté mentionnée précédemment, on peut envisager d'enregistrer la position des discontinuités le long du joint lors d'une opération préalable au soudage. Toutefois, cette opération est longue et coûteuse, de telle sorte qu'elle est considérée comme inadaptée au problème posé.

On a aussi envisagé, dans le document US-A-4 010 346, d'interrompre l'asservissement de position d'un appareil de soudage lorsqu'un point de soudure est détecté par un détecteur de proximité par contact. Toutefois la sensibilité d'un tel système n'est pas satisfaisante, compte tenu notamment des parasites produits lors du soudage.

La présente invention a précisément pour objet un procédé de positionnement latéral d'un organe tel qu'une torche de soudage par rapport à un joint formé entre deux surfaces métalliques et présentant des discontinuités telles que des points de soudure assurant le positionnement préalable des pièces, selon lequel ces discontinuités n'affectent pas le positionnement latéral de la sonde sans qu'il soit nécessaire d'enregistrer la position des discontinuités avant d'effectuer le positionnement de l'organe proprement dit. L'invention a également pour objet un dispositif pour la mise en œuvre de ce procédé.

A cet effet et conformément à la présente invention, il est proposé un procédé de positionnement latéral d'un organe par rapport à un joint formé entre deux surfaces métalliques et présentant des discontinuités, selon lequel on utilise au moins une sonde à courants de Foucault, on traite les signaux délivrés par chacune des sondes pour obtenir au moins un signal de positionnement qui varie avec le décalage de l'axe de la sonde correspondante par rapport à l'axe du joint, ce signal de positionnement étant fonction de la différence de phase entre un signal d'alimentation de ladite sonde et le signal aux bornes de celle-ci, et on déplace latéralement ledit organe en fonction des variations du signal de positionnement, caractérisé en ce que l'on engendre ledit signal des positionnement en ajoutant au signal aux bornes de la sonde un signal déphasé de φ par rapport audit signal d'alimentation, puis en comparant en phase le signal ainsi obtenu au signal d'alimentation dans un discriminateur de phases conçu de telle manière que, lorsque ses entrées sont déphasées de φ, sa sortie est nulle, en ce que l'on traite les signaux délivrés par chacune des sondes pour obtenir au moins un signal de présence d'une discontinuité émis lorsque la sonde correspondante est en vis-à-vis d'une discontinuité du joint, et en ce que l'on interrompt la commande du déplacement dudit organe en fonction des variations du signal de positionnement lorsqu'un signal de présence d'une discontinuité est émis.

Conformément à un premier mode de réalisation de l'invention, on utilise une seule sonde à courants de Foucault et le signal de présence d'une discontinuité est émis entre deux variations caractéristiques du signal de positionnement.

Conformément à un deuxième mode de réalisation de l'invention, on utilise au moins deux sondes à courants de Foucault décalées dans le sens du joint.

Selon une première variante de ce deuxième mode de réalisation de l'invention, le signal de présence d'une discontinuités est émis entre deux variations caractéristiques du signal de positionnement de la première sonde, le déplacement latéral dudit organe étant commandé en fonction des variations du signal de positionnement de la deuxième sonde.

Selon une deuxième variante du deuxième mode de réalisation de l'invention, on traite les signaux délivrés par la première sonde pour obtenir un signal de proximité qui varie avec la distance h séparant la sonde de la surface en vis-à-vis, on déplace la première sonde latéralement avec ledit organe en fonction des variations du signal de positionnement fourni par la deuxième sonde afin de centrer la première sonde sur l'axe du joint et le signal de présence d'une discontinuité est émis à partir des variations du signal de proximité.

Selon une troisième variante du deuxième mode de réalisation de l'invention, le signal de présence d'une discontinuité est émis lorsque la différence entre les signaux de positionnement obtenus à partir de chacune des sondes dépasse un seuil prédéterminé.

Dans le premier et dans le deuxième modes de réalisation de l'invention, on peut déterminer à partir des variations du signal de positionnement avant et après l'émission d'un signal de présence d'une discontinuité un signal de positionnement calculé, le déplacement latéral dudit organe étant alors commandé au moyen d'un signal de commande fonction du signal de positionnement en l'absence d'un signal de présence d'une discontinuité et fonction du signal de positionnement calculé lorsqu'un signal de présence de discontinuité est émis. De préférence, on détermine alors le signal de positionnement calculé dans un premier temps à partir des variations du signal de positionnement pendant une période donnée avant l'émission d'un signal de présence d'une discontinuité et, dans un deuxième temps, à partir des variations du signal de positionnement pendant la même période après la fin de l'émission du signal de présence d'une discontinuité.

Dans le deuxième mode de réalisation de l'invention, le calcul peut être effectué à partir des informations fournies par la sonde de positionnement qui se trouve située en avant de la torche dans le sens du déplacement.

Dans le deuxième mode de réalisation de l'invention, on peut commander directement le déplacement dudit organe au moyen du signal de positionnement en l'absence d'un signal de présence d'une discontinuité, la commande du déplacement étant bloquée avec un certain retard après l'émission d'un signal de présence d'une discontinuité. Ce retard peut être déterminé soit par affichage préalable, soit à partir de la vitesse de déplacement des sondes le long du joint et de la distance séparant ces sondes. Ce type de traitement peut être utilisé dans les trois variantes du deuxième mode de réalisation de l'invention.

La présente invention a également pour objet un dispositif de positionnement latéral d'un organe par rapport à un joint formé entre deux surfaces métalliques et présentant des discontinuités permettant de mettre en œuvre le procédé défini précédemment, comme il est décrit dans la revendication 13.

On décrira maintenant, à titre d'exemple non limitatif, différents modes de réalisation de l'invention en se référant aux dessins annexés dans lesquels:

— la figure 1 est une vue schématique, en perspective, qui représente un dispositif selon l'invention permettant à la fois de régler en hauteur une torche de soudage par rapport à deux tôles à souder et de disposer cette torche en vis-à-vis du joint défini entre les deux tôles,

— la figure 2 représente de façon schématique un premier mode de réalisation du circuit d'asservissement assurant le positionnement latéral de la tête de soudage de la figure 1 lorsque des points de soudure ont été faits au préalable dans le joint séparant les deux tôles à souder,

— la figure 3 représente le circuit de traitement par différence de phases du signal délivré par la sonde à courants de Foucault utilisée dans le dispositif de la figure 1, ce circuit de traitement étant destiné à être utilisé dans le circuit d'asservissement de la figure 2,

— la figure 4 représente le circuit déphaseur logique utilisé dans le circuit de traitement représenté sur la figure 3,

— la figure 5 représente le circuit discriminateur de phases utilisé dans le circuit de traitement de la figure 3,

— la figure 6 représente les variations du signal $V_{ph}$ délivré par le circuit de traitement de la figure 3 en fonction du décalage latéral d de la sonde par rapport au joint séparant les tôles à souder,

— la figure 7 représente de façon schématique le circuit de détection de points de soudure, le circuit de calcul de trajectoire et le circuit de commande utilisés dans le circuit d'asservissement de la figure 2,

— la figure 8 représente les variations du signal de commande $V_c$ délivré par le circuit de commande de la figure 7 avant et après l'émission d'un signal de présence d'une discontinuité par le circuit de détection de points de soudure,

— la figure 9 est une vue comparable à la figure 8 représentant les variations du signal $V_c$ avant, pendant, et après l'émission d'un signal de présence d'une discontinuité par le circuit de détection de points de soudure,

— la figure 10 représente un deuxième mode de réalisation du circuit d'asservissement assurant le positionnement latéral de la tête de soudage conformément à l'invention, selon lequel une sonde de détection de points de soudure est associée à la sonde de positionnement,

— la figure 11 représente une variante de réalisation du circuit d'asservissement de la figure 10,

— la figure 12 représente en a, b et c trois positions particulières d'une sonde à courants de Foucault comprenant deux bobines disposées dans un plan perpendiculaire au joint séparant les deux tôles à souder, cette sonde pouvant notamment être la sonde de positionnement latéral du dispositif de la figure 1,

— la figure 13 est une vue schématique, en perspective, représentant une sonde à courants de Foucault comportant deux bobines disposées longitudinalement par rapport au joint séparant les deux tôles à souder, cette sonde pouvant notamment être une sonde de détection des points de soudure,

— la figure 14 montre les variations du signal $V_{ph2}$ émis par le circuit de traitement de la figure 3 associé à une sonde à courants de Foucault du type de celle de la figure 13, lorsque cette sonde se déplace le long d'un joint comportant un point de soudure,

— la figure 15 représente de façon schématique une variante de réalisation d'un circuit de détection de points de soudure pouvant être utilisé dans les circuits d'asservissement des figures 10 ou 11,

— la figure 16 représente un circuit susceptible d'être associé à une sonde à courants de Foucault comprenant une seule bobine et destinée à la détection de points de soudure, et

— la figure 17 représente les variations du signal $V_{ph2}$, émis par le circuit de traitement de la figure 16 en fonction de la distance $\underline{h}$ séparant la sonde de la surface en vis-à-vis.

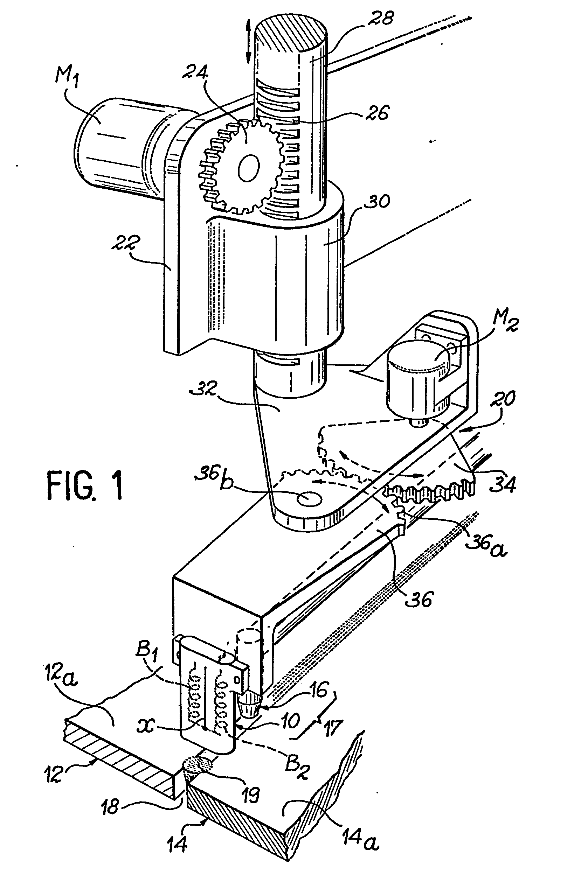

Le dispositif selon l'invention comprend un détecteur à courants de Foucault 10 qui se compose dans le cas le plus simple d'une sonde à courants de Foucault comme l'illustre la figure 1.

Rappelons que le principe d'une telle sonde consiste à alimenter une bobine par un courant électrique sinusoïdal haute fréquence, de manière à créer un champ alternatif qui induit dans une pièce en matériau conducteur de l'électricité disposée en vis-à-vis de la sonde des courants de Foucault créant en retour un champ qui s'oppose au champ initial et modifie l'impédance de la bobine. Les variations de l'impédance de la bobine donnent donc une indication de la disposition de la bobine par rapport à la pièce en vis-à-vis et de la présence d'un joint sur cette pièce.

Afin de pouvoir effectuer une mesure différentielle permettant de déterminer le positionnement de la sonde par rapport à un joint 18 formé sur les surfaces 12a, 14a des pièces 12 et 14 à souder, la sonde comprend deux bobines $B_1$ et $B_2$ dont les axes sont disposés dans un même plan et qui sont disposées de façon symétrique par rapport à un axe $\underline{x}$ définissant l'axe de la sonde. Dans la variante de réalisation représentée sur la figure 1, les axes des deux bobines $B_1$ et $B_2$ sont parallèles, de telle sorte qu'elles sont disposées toutes deux à égale distance par rapport à l'axe $\underline{x}$.

Bien entendu, d'autres variantes de réalisation peuvent être envisagées. D'une façon générale, toute disposition des bobines $B_1$ et $B_2$ conduisant à une symétrie des courants de Foucault induits peut être utilisée. En pratique, cela signifie que les bobines $B_1$ et $B_2$ sont symétriques par rapport à l'axe $\underline{x}$. Ainsi, les axes des bobines $B_1$ et $B_2$ peuvent être parallèles et disposés dans un plan normal au joint 18 comme l'illustre la figure 1, ou encore inclinés dans ce plan de façon à se couper selon l'axe $\underline{x}$ et à former avec ce dernier un angle donné. Les bobines $B_1$ et $B_2$ peuvent aussi être disposées dans un même plan selon l'une ou l'autre des dispositions précédentes, ce plan étant incliné par rapport à la normale aux surfaces 12a, 14a et coupant ces surfaces selon une ligne perpendiculaire au joint 18. Ces bobines $B_1$ et $B_2$ peuvent encore être disposées dans des plans symétriques par rapport au plan normal aux surfaces et perpendiculaire au joint, ces plans coupant les surfaces selon une ligne perpendiculaire au joint.

On voit sur la figure 1 que la torche de soudage 16 à positionner est liée mécaniquement de façon rigide au détecteur 10 pour former avec ce dernier la tête de soudage 17 proprement dite. La distance entre le détecteur et la torche est choisie de telle sorte que le joint 18 puisse être considéré localement comme une droite. Elle est donc d'autant plus petite que le rayon de courbure minimum du joint à souder est faible. Cette distance est également déterminée en fonction de la précision souhaitée.

On a représenté à titre d'exemple sur la figure 1 l'ensemble des moyens mécaniques permettant de positionner la tête 17 par rapport aux deux tôles à souder 12 et 14 définissant entre elles le joint 18 qui doit être suivi par la torche de soudage 16. Bien que les tôles 12 et 14 soient planes et que le joint 18 soit rectiligne sur la figure, on comprendra que l'invention peut être utilisée quelles que soient les formes des tôles et du joint.

En particulier, comme on le verra par la suite, l'invention est particulièrement adaptée au cas où les tôles 12 et 14 sont maintenues en position par des points de soudure tels que le point 19 réalisés au préalable de façon généralement aléatoire.

Dans l'exemple de réalisation représenté sur la figure 1, la tête de soudage 17 est portée par un mécanisme 20 permettant à la fois d'assurer son positionnement en hauteur par rapport aux surfaces 12a et 14a et son positionnement latéral par rapport au joint 18.

Le mécanisme de positionnement 20 de la tête de soudage comprend un bras de supportage 22 relié à un porteur mobile (non représenté) permettant à la tête de soudage de se déplacer le long du joint 18. Le bras 22 supporte un moteur électrique $M_1$ dont l'arbre de sortie horizontal est solidaire d'un pignon 24 qui s'engrène dans une crémaillère 26 formée sur une colonne verticale 28 guidée par un manchon 30 solidaire du bras 22, de façon à pouvoir se déplacer de bas en haut et de haut en bas sous l'action du moteur $M_1$. Ce premier ensemble permet de positionner la tête de soudage 17 en hauteur par rapport au joint 18.

La colonne 28 porte à son extrémité inférieure une plaque horizontale 32 qui supporte un deuxième moteur $M_2$ dont l'arbre de sortie vertical entraîne en rotation un secteur circulaire denté 34 qui s'engrène sur un autre secteur denté 36 monté pivotant ainsi que le secteur 34 en dessous de la plaque 32. Le détecteur 10 et la torche de soudage 16 constituant la tête de soudage 17 sont fixés sur le secteur denté 36 du côté opposé à la denture 36a de ce dernier par rapport à l'axe de pivotement 36b, les axes du détecteur et de la torche étant alignés avec l'axe 36b. Comme le montre la figure 1, le détecteur 10 est placé en avant de la torche de soudage dans le sens de déplacement de la tête 17. Ce deuxième ensemble permet de déplacer latéralement la tête 17 par rapport au joint 18.

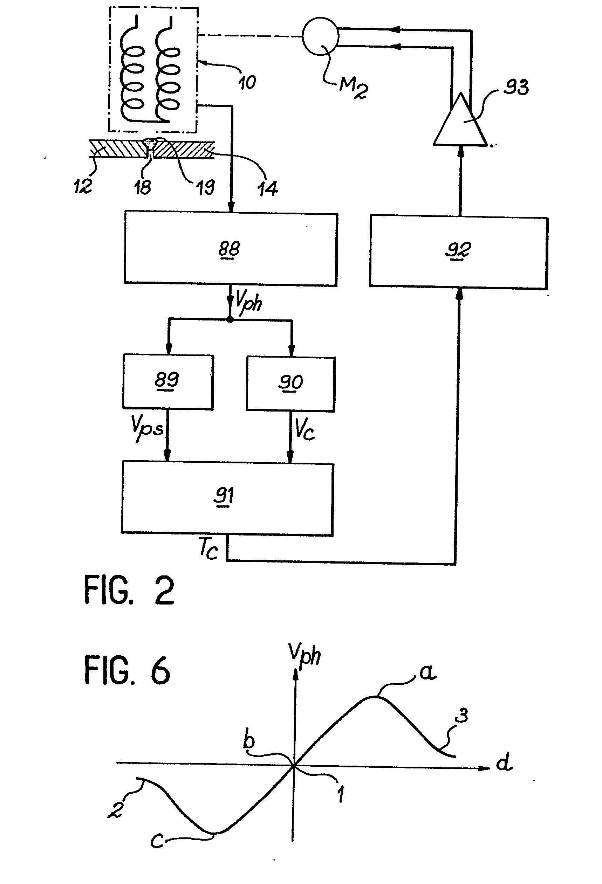

En plus de la tête de soudage 17 et du mécanisme 20, le dispositif de positionnement selon l'invention comprend, dans un premier mode de réalisation de l'invention représenté sur la figure 2, un circuit de traitement électronique 88 dans lequel sont injectés les signaux en provenance de la sonde 10. Le circuit de traitement 88 délivre un signal $V_{ph}$ qui est injecté simultanément dans un circuit de détection de points de soudure 89 et dans un circuit de lissage et d'échantillonnage 90.

Comme on le verra plus en détail par la suite, le circuit 89 délivre un signal de présence d'un point de soudure $V_{ps}$ lorsque la sonde 10 détecte la présence d'un point de soudure 19 sur le joint 18 séparant les tôles 12 et 14. D'autre part, le circuit 90 transforme le signal continu $V_{ph}$ en un signal numérique $V_c$ constitué d'une succession d'échelons de tension lissés et destiné, comme on le verra par la suite, à permettre de réaliser certaines fonctions en numérique par exemple à l'aide de microprocesseurs.

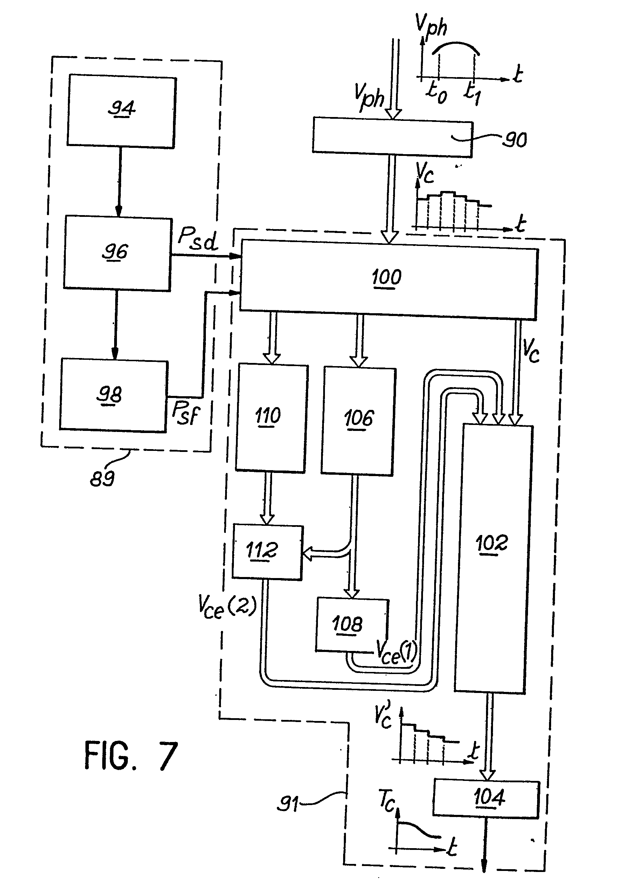

Le signal $V_c$ ainsi que, lorsqu'il existe, le signal $V_{ps}$ sont transmis à un circuit de calcul de trajectoire et de commande 91 qui sera décrit plus en détail par la suite en se référant à la figure 7. Le circuit 91 comprend également à la sortie des moyens de filtrage qui permettent de restituer à la sortie un signal de commande $T_c$ variant de façon continue. Ce signal $T_c$ est transmis à un circuit d'asservissement 92 de type connu, dont le signal de sortie est injecté dans un amplificateur de puissance 93 qui commande le moteur $M_2$ pour assurer le positionnement latéral de la sonde 10 au moyen du mécanisme de la figure 1.

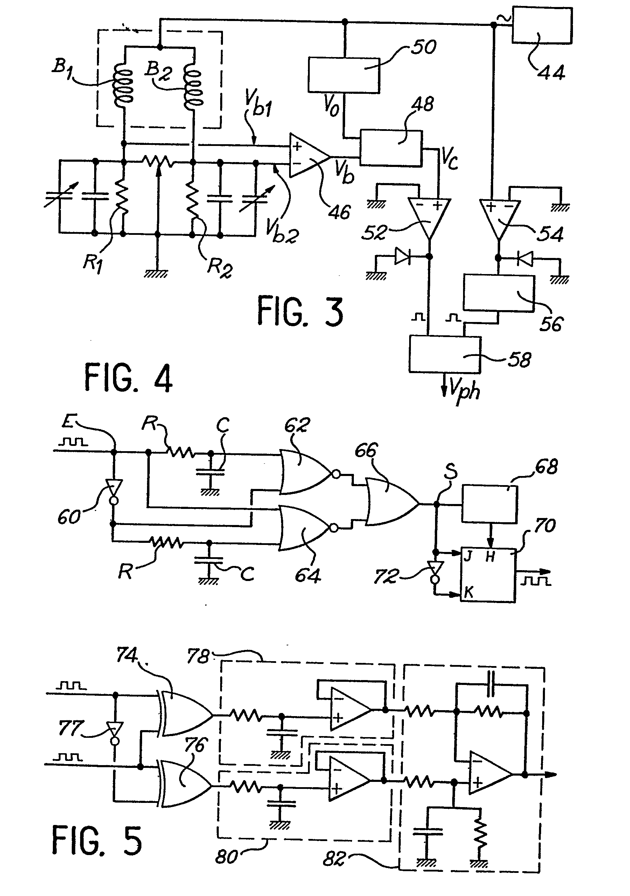

On a représenté sur la figure 3 le circuit de traitement électronique 88 des signaux délivrés par la sonde à courants de Foucault 10. Ce circuit permet d'effectuer une mesure différentielle utilisable pour le positionnement latéral de la tête de soudage sur la ligne de soudure.

Afin de permettre la détection des variations de l'impédance de chacune des bobines $B_1$ et $B_2$ de la sonde, celles-ci sont placées dans un pont de mesure symétrique dont les deux branches $R_1$ et $R_2$ servent à assurer l'équilibre. Le pont de mesure ainsi constitué est alimenté entre le point haut défini par la jonction des bobines $B_1$ et $B_2$ et le point bas défini par la jonction des branches $R_1$ et $R_2$ par un signal sinusoïdal haute fréquence (par exemple 240 kHz) provenant d'un oscillateur H.F. 44. Les signaux de sortie sinusoïdaux $V_{b1}$ et $V_{b2}$ pris respectivement aux bornes communes des branches $B_1$ et $R_1$ et $B_2$ et $R_2$ sont transmis respectivement à la borne + et à la borne − d'un amplificateur différentiel 46 qui délivre un signal sinusoïdal $V_b$. Le signal $V_b$ est injecté dans un sommateur 48 avec un signal $V_0$ est injecté dans un sommateur 48 avec un signal $V_0$ qui correspond au signal injecté dans le pont de mesure par l'oscillateur 44 et déphasé de $\frac{\pi}{2}$ par un déphaseur 50. Le signal sinusoïdal $V_c$ délivré par le sommateur 48 est injecté à la borne + d'un comparateur 52 dont la borne − est connectée à la terre. De même, le signal sinusoïdal délivré par l'oscillateur 44 est injecté à la borne + d'un autre comparateur 54 dont la borne − est également reliée à la terre. Les comparateurs 52 et 54 délivrent des signaux logiques positifs pour les alternances positives des signaux sinusoïdaux qui leur sont injectés. Le signal logique délivré par le comparateur 54 est représentatif des alternances du signal sinusoïdal délivré par l'oscillateur 44. Il est injecté dans un déphaseur logique 56 délivrant un signal déphasé d'une valeur donnée par rapport au signal d'entrée. Ce signal déphasé est à son tour injecté dans un discriminateur de phase 58 en même temps que le signal délivré par le comparateur 52, ce dernier étant représentatif de la valeur des signaux aux bornes des bobines $B_1$ et $B_2$. Le discriminateur de phase 58 délivre un signal $V_{ph}$ représentatif de la différence de phase entre le signal injecté dans le pont et celui aux bornes des bobines.

Comme le montre la figure 4, le déphaseur logique 56 comprend un inverseur 60 et deux circuits RC permettant de retarder le signal injecté en E dans le déphaseur et le signal sortant de l'inverseur 60. Le signal injecté dans le déphaseur et retardé par l'un des circuits RC, ainsi que le signal sortant de l'inverseur 60 sont injectés dans une première porte NON/OU 62. De même, le signal injecté en E dans le déphaseur 56 ainsi que le signal sortant de l'inverseur 60 et retardé par le second circuit RC sont injectés dans une seconde porte NON/OU 64. Les signaux délivrés par chacune des portes NON/OU 62 et 64 sont injectés dans une porte OU 66 qui délivre en S un signal logique dont chaque impulsion correspond au début et à la fin d'un créneau du signal injecté à l'entrée E du déphaseur 56. Ce signal logique est injecté à l'entrée d'un monostable 68, à l'entrée J d'une bascule JK 70 et, par l'intermédiaire d'un inverseur 72, à l'entrée K de cette dernière. Le signal de sortie du monostable 68, qui correspond à une suite de créneaux de durée déterminée débutant avec un retard déterminé par rapport à chaque impulsion du signal délivré en S, est injecté à l'entrée H de la bascule JK dont le signal de sortie délivré en Q est identique au signal injecté à l'entrée E du déphaseur mais déphasé selon une valeur déterminée par le retard imposé par le monostable 68. Ce signal de sortie est injecté dans le discriminateur de phase 58.

Comme le montre la figure 5, les deux entrées du discriminateur de phase 58 sont reliées, d'une part, à une porte OU EXCLUSIF 74 et, d'autre part, à une porte OU EXCLUSIF 76 après passage dans un inverseur 78 du signal provenant du déphaseur logique 56. La sortie de chacune des portes OU EXCLUSIF 74, 76 est reliée à un intégrateur 78, 80 dont les signaux de sortie, représentant la composante continue de chacun des signaux injectés à l'entrée du discriminateur de phase, sont injectés dans un soustracteur 82 délivrant le signal de sortie continu $V_{ph}$ dont la valeur correspond à la différence de phase entre le signal délivré par le déphaseur 56 et le signal issu du comparateur 52.

Les variations du signal $+V_{ph}$ délivré par le cir-

cuit de traitement qui vient d'être décrit en se référant aux figures 3 à 5 en fonction du décalage latéral $\underline{d}$ de l'axe $\underline{a}$ de la sonde par rapport au milieu du joint 18 sont représentées sur la figure 6. Rappelons que le déplacement correspondant de la sonde 10 est obtenu au moyen du moteur $M_2$ sur la figure 1. La courbe de la figure 6 est remarquable, d'une part, par le fait que le signal $V_{ph}$ devient nul lorsque le décalage $\underline{d}$ est nul et, d'autre part, par le fait que le signal $V_{ph}$ est positif lorsque la sonde est décalée d'un côté par rapport au joint et négatif lorsque la sonde est décalée de l'autre côté par rapport au joint. Ces deux particularités de la courbe de la figure 6 permettent de réaliser un repérage de la position et du sens de déplacement de la sonde par rapport au joint. Ainsi, quand la sonde se déplace transversalement par rapport au joint 18, et de la gauche vers la droite en considérant la figure 1, le signal $V_{ph}$ passera d'une tension négative à une tension positive.

On remarquera que la courbe de la figure 6 est tracée dans le cas où le déphasage des deux signaux appliqués au discriminateur de phase 58 est réglé de telle sorte que la tension $V_{ph}$ soit nulle lorsque le centre du joint 18 est placé exactement dans le prolongement de l'axe $\underline{x}$ de la sonde 10. Le réglage de ce déphasage s'effectue au moyen du déphaseur logique 56 en réglant de façon appropriée les impulsions délivrées par le monostable 68 et notamment le retard de ces impulsions par rapport aux impulsions délivrées en S par la porte OU 66. En effet, le déphasage du signal délivré par l'oscillateur au moyen du déphaseur logique 56 permet de mettre ce signal en quadrature de phase avec le signal délivré par le comparateur 52 lorsque l'axe $\underline{x}$ de la sonde passe par le milieu du joint 18, ce qui conduit à un signal de sortie $V_{ph}$ du discriminateur de phase 58 nul dans cette position.

On remarquera également que la courbe de la figure 6 est plus ou moins aplatie selon la valeur de la distance $\underline{h}$ qui sépare la sonde 10 des surfaces 12a et 14a. Ainsi, la sensibilité et donc la précision de la localisation du joint augmentent lorsque la sonde est plus proche de la surface des tôles. A l'inverse, la mesure n'est plus significative au-delà d'une certaine distance qui varie avec la nature de la pièce et par exemple la fréquence de travail (dans des conditions d'expérimentation particulières, cette distance a été d'environ 15 mm). En revanche, la largeur du joint à détecter est pratiquement sans incidence sur le positionnement de la sonde, dans la limite de la compatibilité avec la dimension du détecteur (écart entre les bobines).

En fonctionnement normal, c'est-à-dire en l'absence d'un point du soudure 19, la distance $\underline{d}$ reste suffisamment faible pour que le point représentatif de la position de la sonde 10 reste au voisinage de la zone 1 sur la figure 6. En revanche, lorsque le capteur passe sur un point assimilable à une continuité métallique telle qu'un point de soudure, la réponse du capteur passe brutalement de la zone 1 à la zone 2 ou à la zone 3 sur la figure 6, ces dernières zones correspondant à la réponse de la sonde en pleine tôle. On conçoit que cette variation rapide de la caractéristique $V_{ph}$ est détectable et peut être utilisée par le circuit de détection 89.

On décrira maintenant plus en détail en se référant à la figure 7 les différents éléments constituant le circuit de détection de points de soudure 89, le circuit de lissage et d'échantillonnage 90, et le circuit de calcul de trajectoire et de commande 91. Ainsi, le circuit de détection 89 comprend des moyens de détection 94 qui sont sensibles aux variations caractéristiques du signal $V_{ph}$ en fonction de la distance $\underline{d}$ entre la zone 1 et l'une ou l'autre des zones 2 et 3 pour délivrer par l'intermédiaire d'un circuit de traitement 96 un signal $P_{sd}$ représentatif du début d'une discontinuité du joint. Les moyens de détection 94 sont également sensibles à une variation caractéristique du signal $V_{ph}$ de l'une ou l'autre des zones 2 et 3 à la zone 1 sur la figure 6 pour délivrer par l'intermédiaire d'un circuit 98 un signal $P_{sf}$ représentatif de la fin d'une discontinuité du joint.

Les signaux $P_{sd}$ et $P_{sf}$ sont injectés dans un circuit de multiplexage 100 avec le signal numérique $V_c$ délivré par le circuit de lissage et d'échantillonnage 90. On voit sur la figure 7 que le circuit 90 transforme le signal continu $V_{ph}$ en un signal numérique $V_c$ constitué d'une succession d'échelons de tension injectés dans le circuit de multiplexage 100. En l'absence d'une discontinuité du joint, c'est-à-dire après l'émission d'un signal $P_{sf}$, le signal numérique $V_c$ est transmis directement par le circuit de multiplexage 100 à un circuit de commande 102 qui délivre alors un signal de sortie numérique $V'_c$ identique au signal $V_c$ mais émis avec un certain retard par rapport à ce dernier pour tenir compte du décalage existant entre la sonde de mesure et la torche de soudage. Le signal numérique $V'_c$ est ensuite transformé en un signal continu $T_c$ dans un circuit de filtrage 104 avant d'être injecté dans le circuit d'asservissement 92 comme l'illustre la figure 2.

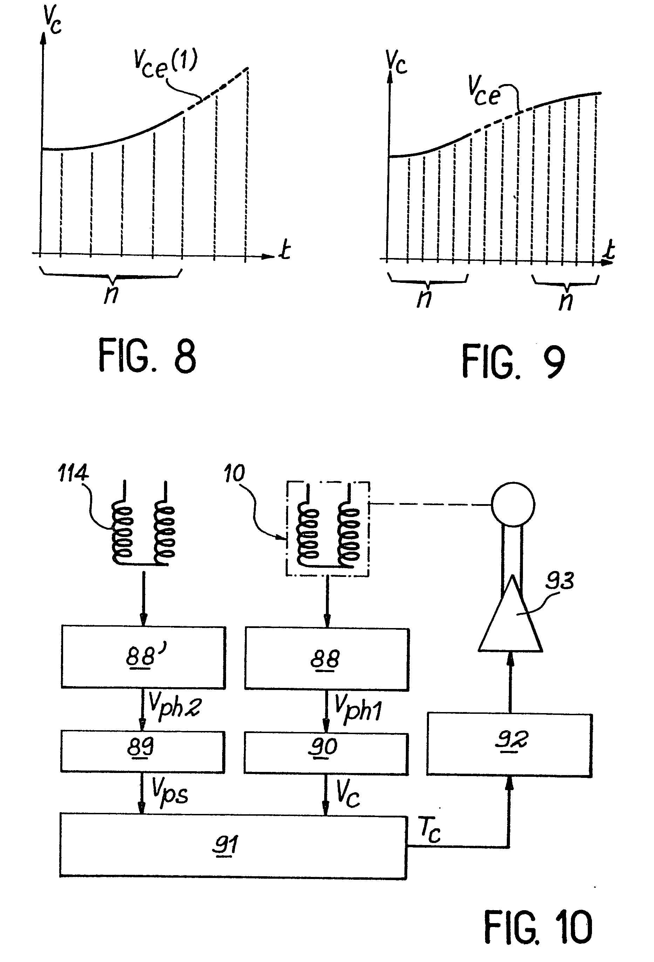

Lorsqu'une discontinuité est détectée par le circuit 89, c'est-à-dire lorsqu'un signal $P_{sd}$ est émis par le circuit 96, un nombre donné $\underline{n}$ d'échantillons du signal $V_c$ précédant l'émission du signal $P_{sd}$ est aiguillé par le circuit de multiplexage 100 vers une première mémoire 106. Ces $\underline{n}$ échantillons sont transmises à un circuit d'extrapolation 108 qui délivre la première partie $V_{ce(1)}$ du signal de positionnement calculé $V_{ce}$, comme on l'a représenté en trait discontinu sur la figure 8.

Lorsqu'un signal $P_{sf}$ représentatif de la fin d'une discontinuité est émis par le circuit 98, le circuit de multiplexage 100 injecte dans une deuxième mémoire 110 les $\underline{n}$ premiers échantillons du signal $V_c$ suivant l'émission de ce signal $P_{sf}$. Les deux séries de signaux stockés dans les mémoires 106 et 110 sont alors injectées dans un circuit d'interpolation 112 qui délivre la deuxième partie $V_{ce(2)}$ du signal de positionnement calculé $V_{ce}$. Comme on l'a représenté en traits discontinus sur la figure 9, le signal de position calculé $V_{ce}$ obtenu successivement à l'aide des circuits 108 et 112 permet de remplacer le signal de positionnement $V_c$ (représenté en traits continus) au niveau d'une discontinuité du joint. Les deux parties du signal $V_{ce}$ émis successivement par les circuits 108 et 112 sont injectées dans le circuit de commande 102 à la place du signal de positionnement $V_c$ lorsqu'une discontinuité est détectée par le circuit 89. Au niveau du signal de sortie $V'_c$ délivré par le circuit 102, puis du signal $T_c$ assurant la commande des moyens d'asservissement 92, tout se passe donc comme si le joint qui doit être suivi par la torche de soudage ne présentait aucune discontinuité.

On décrira maintenant en se référant à la figure 10 une première variante d'un deuxième mode de réalisation de l'invention dans lequel une sonde de détection de discontinuité 114 est disposée en avant de la sonde de positionnement latéral 10, si l'on considère le sens de déplacement normal de la tête de soudage. La sonde 114 est du même type que la sonde 10 et comporte également deux bobines. Les différentes possibilités d'orientation de cette sonde par rapport au joint sur lequel on désire se positionner seront examinées plus en détail par la suite.

Dans la première variante de réalisation représentée sur la figure 10 d'un circuit de commande et d'asservissement comportant une sonde de détection de points de soudure distincte de la sonde de positionnement proprement dite, le signal délivré par cette dernière est traité par différence de phases dans un circuit de traitement 88 identique au circuit qui a été décrit précédemment en se référant aux figures 3 à 5. Le signal $V_{ph1}$ délivré par ce circuit de traitement est également injecté dans un circuit de lissage et d'échantillonnage 90 semblable au circuit de lissage et d'échantillonnage du premier mode de réalisation décrit en se référant à la figure 2. Le signal numérique $V_c$ émis par le circuit 90 est transmis à un circuit de calcul de trajectoire et de commande 91 semblable au circuit de calcul de trajectoire et de commande qui vient d'être décrit en se référant à la figure 7. Le signal $T_c$ délivré par ce circuit 91 assure la commande du moteur $M_2$ comme dans le cas du circuit de la figure 2, par l'intermédiaire d'un circuit d'asservissement 92 et d'un amplificateur de puissance 93.

En plus de l'adjonction d'une sonde de détection de points de soudure 114, le circuit de la figure 10 se distingue du circuit de la figure 2 par le fait que le signal délivré par cette sonde 114 est traité dans un circuit de traitement 88' qui est dans ce cas semblable au circuit 88 décrit précédemment en se référant aux figure 3 à 5. Le signal $V_{ph2}$ délivré par le circuit 88' est injecté dans un circuit de détection de points de soudure 89 qui peut être du même type que celui qui a été décrit précédemment en se référant à la figure 7.

On voit que le circuit qui vient d'être décrit en se référant à la figure 10 est pratiquement identique à celui de la figure 2, à la différence qu'au lieu d'utiliser le signal émis par la sonde 10 à la fois pour effectuer le positionnement latéral de la tête de soudage et pour détecter les points de soudure reliant les tôles à souder, cette dernière fonction est réalisée au moyen d'une sonde additionnelle 114, ce qui nécessite un circuit de traitement supplémentaire 88' ou encore un multiplexage permettant de n'utiliser qu'un seul circuit de traitement 88.

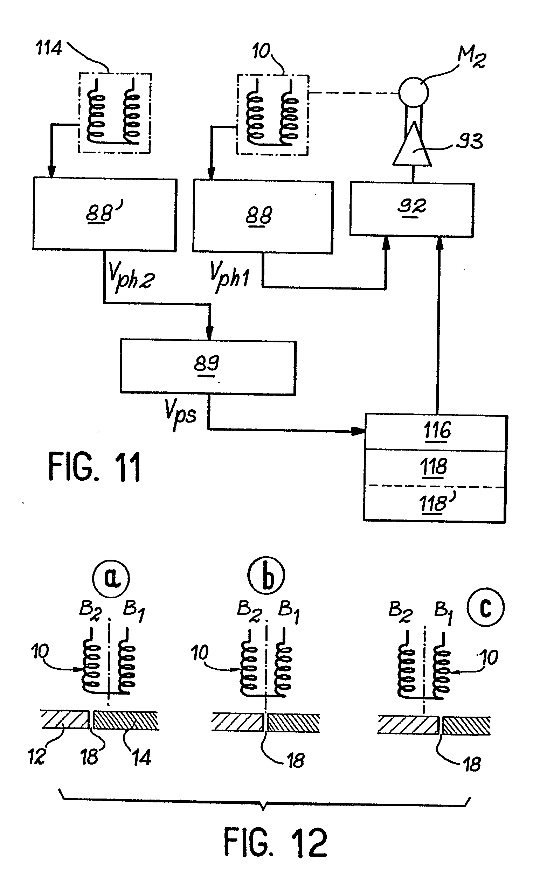

La figure 11 illustre de façon schématique une deuxième variante du deuxième mode de réalisation de l'invention selon lequel deux sondes distinctes sont utilisées pour assurer le positionnement latéral de la tête de soudage et pour assurer la détection des points de soudure. Dans cette deuxième variante, on voit que le signal délivré par la sonde de positionnement 10 et traité dans le circuit 88 pour obtenir le signal $V_{ph1}$ est utilisé directement pour commander le circuit d'asservissement 92, ce dernier agissant sur le moteur $M_2$ par l'intermédiaire d'un amplificateur de puissance 93 comme dans les modes de réalisation précédents.

Dans cette variante, l'asservissement de la tête de soudage étant commandé directement à partir du signal $V_{ph1}$, soit en analogique, soit en numérique, il est nécessaire de bloquer la commande de l'asservissement lorsque le capteur 10 passe au-dessus d'un point de soudure. A cet effet, le signal $V_{ps}$ émis par le circuit de détection de points de soudure 89 entre deux variations caractéristiques du signal $V_{ph2}$ délivré par le circuit de traitement 88' qui est raccordé à la sonde de détection de points de soudure 114 est injecté dans un circuit de blocage 116 dont le signal de sortie agit sur le circuit d'asservissement 92 pour assurer le blocage de ce dernier.

Etant donné qu'il existe un certain décalage entre la sonde 114 et la sonde 10, le signal de blocage délivré par le circuit 116 doit être émis un instant $\Delta T$ après le passage de la sonde 114 au-dessus du point de soudure. Cet instant $\Delta T$ est égal au rapport entre la distance qui sépare le capteur 114 du capteur 10 et la vitesse d'avance de la tête de soudage le long du joint. Si cette vitesse d'avance est connue et suffisamment constante, on peut calculer une fois pour toutes le décalage $\Delta T$ et l'afficher sur un circuit de temporisation 118 associé au circuit de blocage 116. On peut aussi mesurer constamment la vitesse de déplacement de la tête de soudage et déterminer le décalage $\Delta T$ dans un circuit approprié 118'. Dans ce cas, le circuit 118' est associé au circuit de blocage 116 à la place du circuit de temporisation 118. Dans tous les cas, on remarquera que le blocage du circuit d'asservissement 92 a pour effet de maintenir ce dernier au niveau de la dernière valeur du signal $V_{ph1}$ qui lui a été injectée avant son blocage.

Dans les deux variantes du second mode de réalisation qui viennent d'être décrites en se référant aux figures 10 et 11, le capteur de détection de points de soudure 114 peut être disposé soit longitudinalement, soit transversalement par rapport au joint.

En outre, ces deux variantes, qui concernent plus précisément le traitement du signal $V_{ph1}$ obtenu à partir de la sonde de positionnement 10 et du signal $V_{ps}$ représentatif de la présence d'une discontinuité du joint 18 pour commander le déplacement de la tête de soudage, peuvent être combinées avec différentes variantes de réalisation de la sonde de détection de points de soudure 114 et du circuit de détection de points de soudure 89. On décrira maintenant à titre d'exemple en se référant aux figures 12 à 17 différentes variantes de réalisation de la sonde 114 et du circuit 89 susceptibles d'être utilisées dans les circuits des figures 10 et 11, conformément au deuxième mode de réalisation de l'invention.

On a représenté en $\underline{a}$, $\underline{b}$ et $\underline{c}$ sur la figure 12 trois positions particulières de la sonde de positionnement 10 qui correspondent aux points singuliers $\underline{a}$, $\underline{b}$ et $\underline{c}$ sur la caractéristique de la figure 6. Plus précisément, on voit que les positions représentées en $\underline{a}$ et $\underline{c}$ dans lesquelles l'une des bobines $B_1$, $B_2$ de la sonde est disposée dans l'alignement du joint correspondent aux valeurs extrêmes du signal $V_{ph}$ délivré par le circuit de traitement 88, alors que la position $\underline{b}$ dans laquelle la sonde 10 est disposée symétriquement par rapport au joint correspond à une valeur nulle du signal $V_{ph}$ correspondant à la zone 1 mentionnée précédemment.

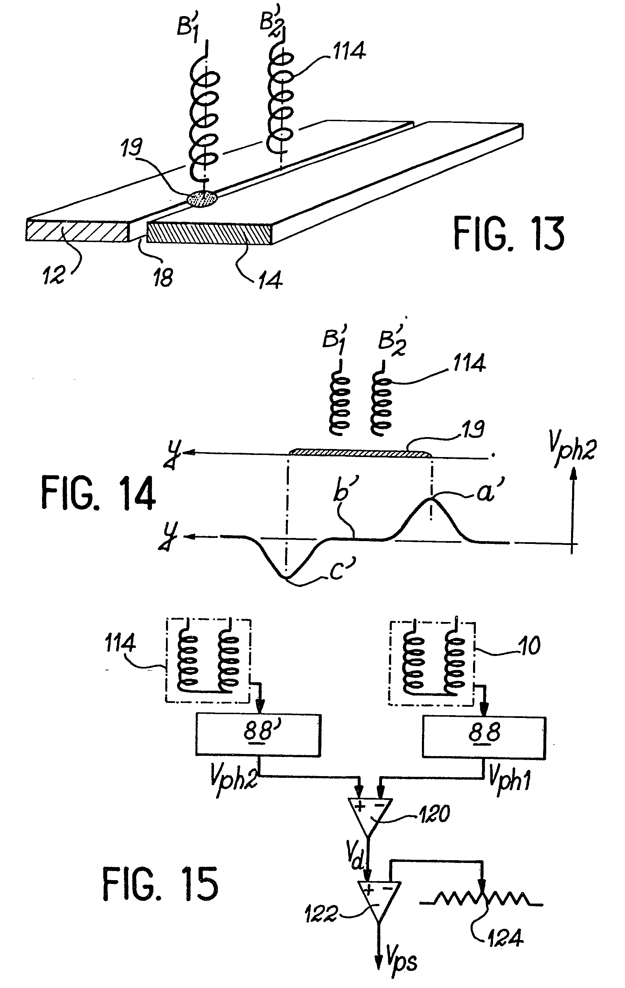

Si l'on rapproche cette observation de la figure 13 qui représente une sonde de détection 114 dont les deux bobines $B'_1$, $B'_2$ sont disposées dans le plan du joint, on voit que pour cette sonde tout se passe comme si elle était dans la position $\underline{a}$ de la sonde 10 lorsque la première bobine de la sonde se trouve en vis-à-vis d'un point de soudure alors que la seconde bobine est encore en vis-à-vis du joint, puis dans la position $\underline{b}$ de la sonde 10 lorsque les deux bobines de la sonde 114 sont en vis-à-vis du point de soudure et enfin dans la position $\underline{c}$ de la sonde 10 lorsque la première bobine de la sonde 114 est à nouveau en regard du joint alors que la deuxième bobine est toujours en vis-à-vis du point de soudure.

Cette caractéristique apparaît clairement sur la figure 14 qui représente les variations du signal $V_{ph2}$ délivrées par le circuit 88' qui est associé à la sonde de détection de point de soudure 114 en fonction du déplacement $\underline{y}$ de cette sonde le long du joint 18 lorsqu'un point de soudure 19 se trouve sur le trajet de la sonde. Dans ce cas, on voit que le circuit de détection de points de soudure 89 doit émettre le signal de début de point de soudure $P_{sd}$ (figure 7) lorsqu'apparaît le pic $\underline{a}'$ correspondant à la venue de la première bobine de la sonde 114 en vis-à-vis du point de soudure 19, puis émettre le signal de fin de point de soudure $P_{sf}$ (figure 7) lorsqu'apparaît le pic $\underline{c}'$ qui correspond à la venue de la première bobine de la sonde 114 en vis-à-vis du joint 18 au-delà du point de soudure 19.

Dans une autre variante de réalisation, la sonde de détection de points de soudure 114 peut être disposée transversalement au joint comme la sonde de positionnement 10. La détection des points de soudure peut alors se faire de deux manières différentes.

Dans un premier mode de traitement, la détection des points de soudure s'effectue directement à partir de la courbe de la figure 6 correspondant au signal $V_{ph2}$ délivré par le circuit de traitement 88' qui reçoit le signal émis par la sonde de détection 114. Le circuit de détection 89 détecte alors le passage caractéristique de la zone 1 à l'une ou l'autre des zones 2 et 3 de la courbe de la figure 6. La détection est alors totalement identique à celle qui s'effectue à partir d'une sonde unique 10 dans le mode de réalisation de la figure 2.

Dans un second mode de traitement des signaux délivrés par deux sondes 114 et 10 disposées transversalement par rapport au joint, on utilise simultanément les signaux délivrés par chacune des sondes pour émettre le signal de présence d'un joint de soudure $V_{ps}$. Ce mode de traitement est représenté schématiquement sur la figure 15. On voit sur cette figure que les signaux $V_{ph1}$ et $V_{ph2}$ délivrés respectivement par les circuits de traitement 88 et 88' associés à chacune des sondes 10 et 114 sont injectés dans un soustracteur 120 qui délivre un signal de sortie $V_d$ représentatif de la différence entre les signaux $V_{ph1}$ et $V_{ph2}$, ce signal $V_d$ est injecté dans un comparateur 122 sur lequel a été affiché au préalable un seuil prédéterminé au moyen d'un potentiomètre 124 ou de tout autre dispositif analogue. On conçoit que le comparateur 122 n'émet aucun signal lorsque le signal $V_d$ est inférieur au seuil prédéterminé et que le signal de présence d'un point de soudure $V_{ps}$ n'est délivré que lorsque le signal $V_d$ est supérieur à ce seuil.

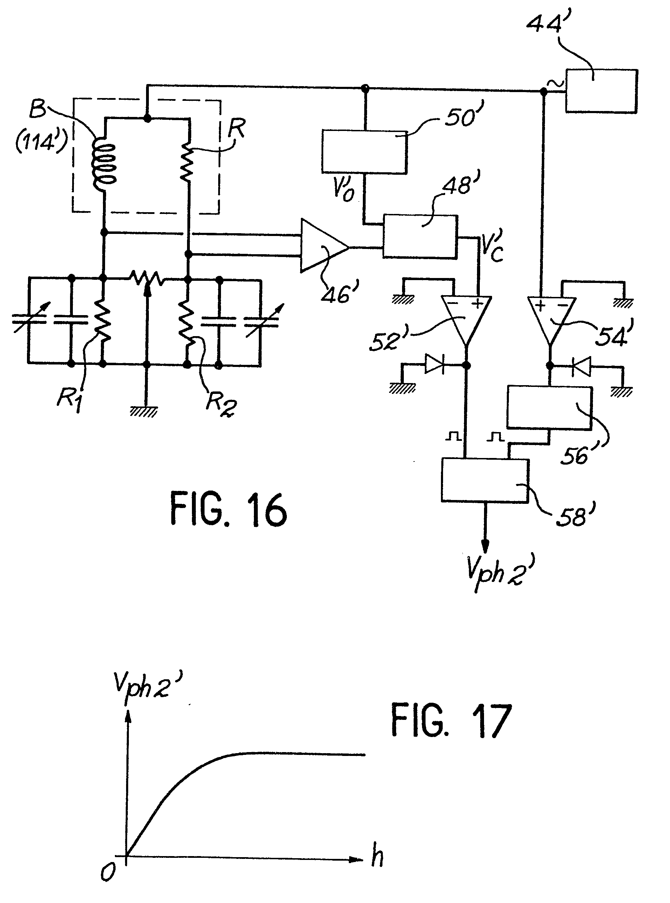

Dans une dernière variante de réalisation de la sonde de détection et du circuit de détection de points de soudure, le capteur de détection de points de soudure 114' ne comprend plus qu'une seule bobine et le circuit de traitement 88' qui lui est associé ne délivre plus un signal représentatif du positionnement latéral de la sonde par rapport au joint comme dans le cas du circuit représenté sur les figures 3 à 5, mais un signal représentatif de la distance $\underline{h}$ séparant la sonde de la surface en vis-à-vis. Bien entendu, la sonde 114' comme la sonde 114 dans les variantes précédemment décrites, est portée par la tête de soudage 17 de telle sorte qu'elle est centrée automatiquement sur le joint 18 avec la sonde 10 et la torche 16. Ce circuit de traitement associé à la sonde 114' est représenté avec la bobine B de cette sonde sur la figure 16. Ce circuit de traitement est pratiquement identique au circuit de la figure 3, de sorte qu'on pourra se reporter utilement à la description de ce dernier circuit en tenant compte du fait que les références ont été affectées d'un indice prime par rapport à la figure 3. De même, le déphaseur logique 56' et le discriminateur de phase 58' sont identiques au déphaseur 56 et au discriminateur 58 représentés respectivement sur les figures 4 et 5, de sorte qu'ils ne seront pas décrits ici à nouveau.

La seule caractéristique qui distingue le circuit de la figure 16 du circuit de la figure 3 est que la deuxième bobine de la sonde est remplacée par une résistance R, de telle sorte que le deuxième signal injecté à l'entrée de l'amplificateur différentiel 46' est un signal proportionnel et en phase avec celui de l'oscillateur 44'. Le circuit de la figure 16 permet de faire une mesure différentielle de phase $V_{ph2}$, entre le signal issu de la bobine B de la sonde de détection de points de soudure 114' et le signal émis par l'oscillateur 44' pris comme référence. Il permet donc d'effectuer une mesure de proximité, c'est-à-dire la mesure de la distance h séparant la bobine B de la surface en vis-à-vis, comme l'illustre la figure 17 qui représente les variations du signal $V_{ph2}$, en fonction de la distance h.

On conçoit aisément que si la bobine B de la sonde 114' est placée dans l'alignement du joint sur lequel on désire se centrer, le signal $V_{ph2}$, est représentatif de la distance entre la bobine et le fond du joint. En revanche, dès qu'un point de soudure apparaît en vis-à-vis de la bobine B, la distance h se réduit très sensiblement surtout si l'on a placé la sonde 114' à une distance relativement proche des tôles à souder. Le signal $V_{ph2}$, franchit alors un seuil prédéterminé en fonction du positionnement de la sonde 114'. Le signal de présence d'un point de soudure $V_{ps}$ est alors émis par le circuit de détection 89.

Bien entendu, les différentes variantes de réalisation qui viennent d'être décrites ne sont données qu'à titre illustratif et nullement limitatif de la portée de l'invention. En effet, on conçoit aisément que différentes modifications peuvent être apportées aussi bien au niveau de la réalisation de la tête de soudage proprement dite qu'au niveau de la configuration et du positionnement de la ou des sondes utilisées ainsi qu'au niveau des circuits de traitement qui leur correspondent. Dans tous les cas, on voit que l'invention assure un positionnement correct et automatique de la torche de soudage ou de tout autre organe à positionner par rapport au joint, et notamment au joint à souder, même lorsque ce joint présente des discontinuités de longueur variable et réparties de façon aléatoire, telles que des points de soudure assurant le positionnement préalable des tôles à souder. Il est à noter que le positionnement de la tête de soudage est réalisé sans qu'il soit nécessaire d'effectuer aucune opération d'apprentissage préalable pour déterminer la position des points.

**Revendications**

1. Procédé de positionnement latéral d'un organe (16) par rapport à un joint (18) formé entre deux surfaces métalliques (12a, 14a) et présentant des discontinuités (19), selon lequel on utilise au moins une sonde à courants de Foucault (10, 114), on traite les signaux délivrés par chacune des sondes pour obtenir au moins un signal de positionnement ($V_{ph}$, $V_{ph1}$, $V_{ph2}$) qui varie avec le décalage (D) de l'axe (x) de la sonde correspondante par rapport à l'axe du joint, ce signal de positionnement étant fonction de la différence de phase entre un signal d'alimentation de ladite sonde et le signal ($V_b$) aux bornes de celle-ci, et on déplace latéralement ledit organe en fonction des variations du signal de positionnement ($V_{ph}$, $V_{ph1}$), caractérisé en ce que l'on engendre ledit signal de positionnement ($V_{ph}$, $V_{ph1}$) en ajoutant au signal $V_b$ aux bornes de la sonde un signal ($V_o$) déphasé de $\varphi$ par rapport audit signal d'alimentation, puis en comparant en phase le signal ($V_c$) ainsi obtenu au signal d'alimentation dans un discriminateur de phases (58) conçu de telle manière que, lorsque ses entrées sont déphasées de $\varphi$, sa sortie est nulle, en ce que l'on traite les signaux délivrés par chacune des sondes pour obtenir au moins un signal ($V_{ps}$) de présence d'une discontinuité émis lorsque la sonde correspondante est en vis-à-vis d'une discontinuité (19) du joint, et en ce que l'on interrompt la commande du déplacement dudit organe en fonction des variations du signal de positionnement lorsqu'un signal ($V_{ps}$) de présence d'une discontinuité est émis.

2. Procédé selon la revendication 1, caractérisé en ce que l'on utilise une seule sonde à courants de Foucault (10) et en ce que le signal ($V_{ps}$) de présence d'une discontinuité est émis entre deux variations caractéristiques du signal de positionnement ($V_{ph}$).

3. Procédé selon la revendication 1, caractérisé en ce que l'on utilise au moins deux sondes à courants de Foucault (10, 114, 114') décalées dans le sens du joint.

4. Procédé selon la revendication 3, caractérisé en ce que le signal ($V_{ps}$) de présence d'une discontinuité est émis entre deux variations caractéristiques du signal de positionnement ($V_{ph2}$) de la première sonde (114), le déplacement latéral dudit organe (16) étant commandé en fonction des variations du signal de positionnement ($V_{ph1}$) de la deuxième sonde (10).

5. Procédé selon la revendication 3, caractérisé en ce que l'on traite les signaux délivrés par la première sonde (114') pour obtenir un signal de proximité ($V_{ph2'}$) qui varie avec la distance (h) séparant la sonde de la surface en vis-à-vis, en ce que l'on déplace la première sonde (114') latéralement avec ledit organe en fonction des variations du signal de positionnement fourni par la deuxième sonde ($V_{ph1}$) afin de centrer la première sonde sur l'axe du joint et en ce que le signal ($V_{ps}$) de présence d'une discontinuité est émis à partir des variations du signal de proximité ($V_{ph2'}$).

6. Procédé selon la revendication 3, caractérisé en ce que le signal ($V_{ps}$) de présence d'une discontinuité est émis lorsque la différence entre les signaux de positionnement ($V_{ph1}$, $V_{ph2}$) obtenus à partir de chacune des sondes (10, 114) dépasse un seuil prédéterminé.

7. Procédé selon l'une quelconque des revendications précédentes, caractérisé en ce que l'on détermine à partir des variations du signal de positionnement ($V_{ph}$) avant et après l'émission d'un signal de présence d'une discontinuité un signal de positionnement calculé ($V_{ce}$) et en ce que l'on commande le déplacement latéral dudit organe au moyen d'un signal de commande ($T_c$) fonction du signal de positionnement ($V_{ph}$) en l'absence d'un signal de présence d'une discontinuité et fonction du signal de positionnement calculé ($V_{ce}$) lorsqu'un signal ($V_{ps}$) de présence d'une discontinuité est émis.

8. Procédé selon la revendication 7, caractérisé en ce que l'on détermine le signal de positionnement calculé ($V_{ce}$) dans un premier temps à partir des variations du signal de positionnement ($V_{ph}$) pendant une période donnée avant l'émission d'un signal ($V_{ps}$) de présence d'une discontinuité et dans un deuxième temps à partir des variations du signal de positionnement pendant la même période après la fin de l'émission du signal de présence d'une discontinuité.

9. Procédé selon l'une quelconque des revendications 3 à 6, caractérisé en ce que l'on commande directement le déplacement dudit organe au moyen du signal de positionnement ($V_{ph1}$) en l'absence d'un signal ($V_{ps}$) de présence d'une discontinuité et en ce que l'on bloque la commande du déplacement avec un certain retard après le début de l'émission d'un signal de présence d'une discontinuité.

10. Procédé selon la revendication 9, caractérisé en ce que l'on détermine le retard par affichage préalable (118).

11. Procédé selon la revendication 9, caractérisé en ce que l'on détermine le retard à partir de la vitesse de déplacement des sondes le long du joint et de la distance séparant ces sondes.

12. Procédé selon l'une quelconque des revendications 1 à 11, caractérisé en ce que l'on donne au déphasage φ une valeur de $\frac{\pi}{2}$.

13. Dispositif de positionnement latéral d'un organe (16) par rapport à un joint (18) formé entre deux surfaces métalliques (12a, 14a) et présentant des discontinuités (19), comprenant au moins une sonde à courants de Foucault (10, 114), des moyens de traitement (88, 88') des signaux délivrés par chacune des sondes émettant au moins un signal de positionnement ($V_{ph}$, $V_{ph1}$, $V_{ph2}$) qui varie avec le décalage (D) de l'axe du joint, ce signal de positionnement étant fonction de la différence de phase entre un signal d'alimentation de ladite sonde et le signal ($V_b$) aux bornes de celle-ci, et des moyens (92, $M_2$) pour déplacer latéralement ledit organe en fonction des variations du signal de positionnement, caractérisé en ce que les moyens de traitement comprennent des moyens (48) pour ajouter au signal ($V_b$) aux bornes de la sonde un signal ($V_o$) déphasé de φ par rapport audit signal d'alimentation, et un discriminateur de phases (58) sensible au signal ($V_c$) ainsi obtenu et au signal d'alimentation pour délivrer un signal de sortie ($V_{ph}$, $V_{ph1}$) qui s'annule lorsque ses entrées sont déphasées de φ, le dispositif comprenant de plus des moyens de détection (89) d'une discontinuité émettant au moins un signal ($V_{ps}$) de présence d'une discontinuité lorsque la sonde correspondante est en vis-à-vis d'une discontinuité du joint et des moyens (91, 116) pour interrompre la commande des moyens (92) pour déplacer latéralement ledit organe en fonction des variations du signal de positionnement lorsqu'un signal de présence d'une discontinuités est émis par les moyens de détection (89) d'une discontinuité.

14. Dispositif selon la revendication 13, caractérisé en ce qu'il comprend une seule sonde à courants de Foucault (10) comportant deux bobines ($B_1$, $B_2$) disposées symétriquement par rapport à un axe (a) contenu dans un plan normal auxdites surfaces et passant par l'axe du joint et en ce que les moyens de détection (89) d'une discontinuité sont sensibles au signal de positionnement ($V_{ph}$) émis par les moyens de traitement (88) pour émettre le signal de présence ($V_{ps}$) d'une discontinuité entre deux variations caractéristiques du signal de positionnement.

15. Dispositif selon la revendication 13, caractérisé en ce qu'il comprend au moins deux sondes à courants de Foucault (10, 114) décalées dans le sens du joint pour définir une première sonde (114) de détection d'une discontinuité et une deuxième sonde (10) de positionnement latéral, la deuxième sonde comportant deux bobines ($B_1$, $B_2$) disposées symétriquement par rapport à un axe (a) contenu dans un plan normal auxdites surfaces et passant par l'axe du joint.

16. Dispositif selon la revendication 15, caractérisé en ce que les moyens de détection (89) d'une discontinuité sont sensibles au signal de positionnement ($V_{ph2}$) émis par les moyens de traitement (88') des signaux délivrés par la première sonde (114) pour émettre le signal de présence ($V_{ps}$) d'une discontinuité entre deux variations caractéristiques de ce signal de positionnement.

17. Dispositif selon la revendication 16, caractérisé en ce que la première sonde (114) comporte deux bobines disposées symétriquement par rapport à un plan normal auxdites surfaces et passant par l'axe du joint.

18. Dispositif selon la revendication 16, caractérisé en ce que la première sonde (114) comporte deux bobines contenues dans un plan normal auxdites surfaces et passant par l'axe du joint et disposées symétriquement par rapport à un axe normal auxdites surfaces et contenu dans ce plan.

19. Dispositif selon la revendication 15, caractérisé en ce qu'il comprend de plus des moyens de traitement des signaux délivrés par la première sonde (114') émettant un signal de proximité ($V_{ph2'}$) qui varie avec la distance (h) séparant la sonde de la surface en vis-à-vis et des moyens pour déplacer latéralement la première sonde (114') avec ledit organe (16) en fonction des variations du signal de positionnement ($V_{ph1}$) fourni par la deuxième sonde afin de centrer la première sonde sur l'axe du joint et en ce que les moyens de détection (89) d'une discontinuité sont sensibles au signal de proximité ($V_{ph2'}$) pour émettre le signal ($V_{ps}$) de présence d'une discontinuité à partir des variations de ce signal de proximité.

20. Dispositif selon la revendication 15, caractérisé en ce que les moyens de détection (89) d'une discontinuité comprennent des moyens soustracteurs (120) déterminant la différence entre les signaux de positionnement ($V_{ph1}$, $V_{ph2}$) émis par les moyens de traitement (88, 88') des signaux délivrés par la première sonde (114) et par la deuxième sonde (10) et des moyens de comparaison (122) de cette différence avec un seuil prédéterminé, ces derniers moyens émettant le signal

($V_{ps}$) de présence d'une discontinuité lorsque ladite différence est supérieure à ce seuil.

21. Dispositif selon l'une quelconque des revendications 13 à 20, caractérisé en ce qu'il comprend de plus des moyens de calcul de trajectoire (106, 108, 110, 112) sensibles aux variations du signal de positionnement ($V_{ph}$) avant et après l'émission d'un signal ($V_{ps}$) de présence d'une discontinuité par les moyens de détection (89) d'une discontinuité pour émettre un signal de positionnement ($V_{ph}$) et au signal de positionnement calculé ($V_{ce}$) pour émettre un signal de commande ($T_c$) fonction respectivement de l'un ou de l'autre de ces signaux selon qu'un signal de présence d'une discontinuité n'est pas émis ou est émis par les moyens de détection d'une discontinuité.

22. Dispositif selon la revendication 21, caractérisé en ce que les moyens de calcul de trajectoire comprennent de premiers moyens (106) de mémorisation des variations du signal de positionnement ($V_{ph}$) pendant une période donnée avant l'émission d'un signal ($V_{ps}$) de présence d'une discontinuité, de deuxièmes moyens (110) de mémorisation des variations du signal de positionnement pendant la même période après la fin de l'émission d'un signal de présence d'une discontinuité, des moyens d'extrapolation (108) déterminant une première partie ($V_{ce(1)}$) du signal de positionnement calculé à partir des variations enregistrées dans les premiers moyens de mémorisation (106) et des moyens d'interpolation (112) déterminant une deuxième partie ($V_{ce(2)}$) du signal de positionnement calculé à partir des variations enregistrées dans les premiers et deuxièmes moyens de mémorisation (106, 110).

23. Dispositif selon l'une quelconque des revendications 15 à 20, caractérisé en ce qu'il comprend de plus des moyens de blocage (116), des moyens (92) pour déplacer latéralement ledit organe en fonction des variations du signal de positionnement ($V_{ph1}$), ces moyens de blocage étant sensibles au signal ($V_{ps}$) de présence d'une discontinuité émis par les moyens (89) de détection d'une discontinuité pour bloquer le déplacement latéral dudit organe.

24. Dispositif selon la revendication 23, caractérisé en ce qu'il comprend de plus des moyens de temporisation (118) qui sont associés aux moyens de blocage (116) pour bloquer le déplacement latéral dudit organe avec un retard prédéterminé.

25. Dispositif selon la revendication 23, caractérisé en ce qu'il comprend de plus des moyens de calcul (118') qui sont associés aux moyens de blocage (116) pour bloquer la déplacement latéral dudit organe avec un retard déterminé à partir de la vitesse de déplacement des sondes (114, 10) le long du joint et de la distance séparant ces sondes.

26. Dispositif selon l'une quelconque des revendications 13 à 25, caractérisé en ce que le déphasage a une valeur de $\frac{\pi}{2}$.

**Patentansprüche**

1. Verfahren zum lateralen Positionieren eines Gliedes (16) bezüglich einer zwischen zwei metallischen Oberflächen (12a, 14a) formierten und mit Unterbrechungen (19) versehenen Fuge (18), bei welchem man wenigstens eine Foucault-Stromsonde (10, 114) verwendet, man die von jeder der Sonden gelieferten Signale aufbereitet, um wenigstens ein Positionierungssignal ($V_{ph}$, $V_{ph1}$, $V_{ph2}$) zu erhalten, das mit der Abweichung (D) der Achse (x) der entsprechenden Sonde gegenüber der Achse der Fuge variiert und das eine Funktion der Phasendifferenz zwischen einem Versorgungssignal der genannten Sonde und dem Signal ($V_b$) an ihren Anschlüssen ist, und man das genannte Glied lateral in Abhängigkeit von den Änderungen des Positionierungssignals ($V_{ph}$, $V_{ph1}$) versetzt, dadurch gekennzeichnet, dass man das genannte Positionierungssignal ($V_{ph}$, $V_{ph1}$) hervorbringt, indem man dem Signal $V_b$ an den Anschlüssen der Sonde ein Signal ($V_o$) hinzufügt, das um φ gegenüber dem Versorgungssignal in der Phase abweicht, man dann das so erhaltene Signal ($V_c$) in der Phase mit dem Versorgungssignal in einem Phasenkomparator (58) vergleicht, der so gestaltet ist, dass, wenn seine Eingänge um φ gegeneinander phasenversetzt sind, sein Ausgang Null ist, und dass man die von jeder der Sonden gelieferten Signale verarbeitet, um wenigstens ein Signal ($V_{ps}$) über die Anwesenheit einer Unterbrechung zu erhalten, das abgegeben wird, wenn die entsprechende Sonde einer Unterbrechung (19) der Fuge gegenübersteht, und dass man den Befehl zum Verschieben des Gliedes in Funktion der Veränderungen des Positioniersignals unterbricht, wenn das eine Unterbrechung anzeigende Signal ($V_{ps}$) abgegeben wird.

2. Verfahren nach Anspruch 1, dadurch gekennzeichnet, dass man eine einzige Foucault-Stromsonde (10) verwendet und dass das Signal ($V_{ps}$) der Anwesenheit einer Unterbrechung zwischen zwei Veränderungen ausgesendet wird, die für das Positioniersignal ($V_{ph}$) charakteristisch sind.

3. Verfahren nach Anspruch 1, dadurch gekennzeichnet, dass man wenigstens zwei Foucault-Stromsonden (10, 114, 114') verwendet, die in Richtung der Fuge gegeneinander versetzt sind.

4. Verfahren nach Anspruch 3, dadurch gekennzeichnet, dass das Signal ($V_{ps}$) der Anwesenheit einer Unterbrechung zwischen zwei Veränderungen ausgesendet wird, die für das Positioniersignal ($V_{ph2}$) der ersten Sonde (114) charakteristisch sind, wobei die laterale Verschiebung des Gliedes (16) in Abhängigkeit von Änderungen des Positioniersignales ($V_{ph1}$) der zweiten Sonde (10) gesteuert wird.

5. Verfahren nach Anspruch 3, dadurch gekennzeichnet, dass man die von der ersten Sonde (114') gelieferten Signale behandelt, um ein Näherungssignal ($V_{ph2'}$) zu erhalten, das mit der Distanz (h) variiert, die die Sonde von der ihr gegenüberstehenden Oberfläche trennt, und dass man die erste Sonde (114') quer mit dem Glied in Abhängigkeit von den Änderungen des Positioniersignals verschiebt, das von der zweiten Sonde ($V_{ph1}$) geliefert wird, um die erste Sonde auf der Achse der Fuge zu zentrieren und dass das Signal ($V_{ps}$) der Anwesenheit einer Unterbrechung von den Änderungen des Näherungssignals ($V_{ph2'}$) ausgehend abgegeben wird.

6. Verfahren nach Anspruch 3, dadurch gekennzeichnet, dass das Signal ($V_{ps}$) der Anwesenheit einer Unterbrechung abgegeben wird, wenn die Differenz zwischen den Positioniersignalen ($V_{ph1}$, $V_{ph2}$), die man von jeder der Sonden (10, 114) erhält, eine vorbestimmte Schwelle übersteigt.

7. Verfahren nach einem der vorhergehenden Ansprüche, dadurch gekennzeichnet, dass man von den Änderungen des Positioniersignals ($V_{ph}$) vor und nach der Abgabe eines Signals der Anwesenheit einer Unterbrechung ein errechnetes Positioniersignal ($V_{ce}$) bestimmt und dass man die laterale Verschiebung des Gliedes mittels eines Befehlssignals ($T_c$) steuert, das eine Funktion des Positionierungssignals ($V_{ph}$) bei Abwesenheit eines Signals der Anwesenheit einer Unterbrechung und eine Funktion des errechneten Positionierungssignals ($V_{ce}$) ist, wenn ein Signal ($V_{ps}$) der Anwesenheit einer Unterbrechung abgegeben wird.

8. Verfahren nach Anspruch 7, dadurch gekennzeichnet, dass man das errechnete Positionierungssignal ($V_{ce}$) in einem ersten Zeitpunkt von den Änderungen des Positionierungssignals ($V_{ph}$) während einer Periode bestimmt, die vor der Abgabe eines Signals ($V_{ps}$) der Anwesenheit einer Unterbrechung gegeben ist, und in einem zweiten Zeitpunkt von Änderungen des Positionierungssignals während derselben Zeitperiode nach dem Ende der Abgabe des Signals der Anwesenheit einer Unterbrechung ausgehend bestimmt.

9. Verfahren nach einem der Ansprüche 3 bis 6, dadurch gekennzeichnet, dass man die Verschiebung des Gliedes mittels des Positionierungssignals ($V_{ph1}$) bei Abwesenheit eines Signals ($V_{ps}$) der Anwesenheit einer Unterbrechung direkt steuert und dass man den Steuerbefehl für die Verschiebung mit einer gewissen Verzögerung nach dem Anfang der Abgabe des Signals der Anwesenheit einer Unterbrechung blockiert.

10. Verfahren nach Anspruch 9, dadurch gekennzeichnet, dass man die Verzögerung durch vorangehende Anzeige (118) bestimmt.

11. Verfahren nach Anspruch 9, dadurch gekennzeichnet, dass man die Verzögerung von der Verschiebungsgeschwindigkeit der Sonden längs der Fuge und von der die Sonden trennenden Distanz ausgehend bestimmt.

12. Verfahren nach einem der Ansprüche 1 bis 11, dadurch gekennzeichnet, dass die Phasenabweichung φ eine Grösse von $\frac{\pi}{2}$ hat.

13. Vorrichtung zum lateralen Positionieren eines Gliedes (16) bezüglich einer zwischen zwei metallischen Oberflächen (12a, 14a) formierten und mit Unterbrechungen (19) versehenen Fuge (18), bestehend aus wenigstens einer Foucault-Stromsonde (10, 114), Einrichtungen (88, 88') zum Verarbeiten der Signale, die von jeder der Sonden geliefert werden, die wenigstens ein Positionierungssignal ($V_{ph}$, $V_{ph1}$, $V_{ph2}$) abgeben, das mit der Verschiebung (D) gegenüber der Achse der Fuge variiert und eine Funktion der Phasendifferenz zwischen dem Versorgungssignal der genannten Sonde und dem Signal ($V_b$) an den Anschlüssen derselben ist, und Einrichtungen (92, $M_2$), zum lateralen Verschieben des genannten Gliedes in Funktion der Änderungen des Positionierungssignals, dadurch gekennzeichnet, dass die Verarbeitungseinrichtungen eine Einrichtung (48) zum Hinzufügen eines Signals ($V_o$), das gegenüber dem Versorgungssignal um den Winkel φ phasenverschoben ist, zum Signal ($V_b$) an den Anschlüssen der Sonde aufweisen, und dass ein Phasendiskriminator (58) vorgesehen ist, der auf das so erhaltene Signal ($V_c$) und auf das Versorgungssignal empfindlich ist, um ein Ausgangssignal ($V_{ph}$, $V_{ph1}$) zu liefern, das Null wird, wenn seine Eingänge um φ phasenverschoben sind, dass die Einrichtung weiterhin Detektoreinrichtungen (89) zum Ermitteln einer Unterbrechung aufweist, die wenigstens ein Signal ($V_{ps}$) der Anwesenheit einer Unterbrechung abgeben, wenn die zugehörige Sonde einer Unterbrechung der Fuge gegenübersteht, und Einrichtungen (91, 116) aufweist, um die Steuerung der Einrichtung (92) zum lateralen Verschieben des Gliedes in Funktion der Änderungen des Positionierungssignals zu unterbrechen, wenn ein Signal der Anwesenheit einer Unterbrechung von den Unterbrechungsdetektoreinrichtungen (89) abgegeben wird.

14. Vorrichtung nach Anspruch 13, dadurch gekennzeichnet, dass sie eine einzige Foucault-Stromsonde (10) aufweist, die zwei Spulen ($B_1$, $B_2$) enthält, die symmetrisch in bezug auf eine Achse (a) angeordnet sind, die in einer Ebene verläuft, die auf den genannten Oberflächen senkrecht steht und welche Achse die Fugenachse schneidet, und dass die Unterbrechungsdetektoreinrichtungen (89) auf das Positionierungssignal ($V_{ph}$) empfindlich sind, das von der Verarbeitungseinrichtung (88) abgegeben wird, um das Signal ($V_{ps}$) der Anwesenheit einer Unterbrechung zwischen zwei Änderungen, die für das Positionierungssignal charakteristisch sind, abzugeben.

15. Vorrichtung nach Anspruch 13, dadurch gekennzeichnet, dass sie wenigstens zwei Foucault-Stromsonden (10, 114) aufweist, die in Richtung der Fuge versetzt sind, um eine erste Sonde (114) zur Ermittlung einer Unterbrechung und eine zweite Sonde (10) der lateralen Positionierung zu beschreiben, wobei die zweite Sonde zwei Spulen ($B_1$, $B_2$) aufweist, die symmetrisch in bezug auf eine Achse (a) angeordnet sind, die in einer Ebene liegt, die auf den genannten Oberflächen senkrecht steht und durch die Fugenachse läuft.

16. Vorrichtung nach Anspruch 15, dadurch gekennzeichnet, dass die Unterbrechungsdetektoreinrichtungen (89) auf das Positionierungssignal (V$_{ph2}$) ansprechen, das von der Verarbeitungseinrichtung (88') der Signale abgegeben wird, die von der ersten Sonde (114) geliefert werden, um das Signal (V$_{ps}$) der Anwesenheit einer Unterbrechung zwischen zwei Veränderungen, die für das Positionierungssignal charakteristisch sind, abzugeben.

17. Vorrichtung nach Anspruch 16, dadurch gekennzeichnet, dass die erste Sonde (114) zwei Spulen enthält, die symmetrisch in bezug auf eine Ebene angeordnet sind, die zu den genannten Oberflächen senkrecht verläuft und durch die Fugenachse läuft.

18. Vorrichtung nach Anspruch 16, dadurch gekennzeichnet, dass die erste Sonde (114) zwei Spulen aufweist, die in einer Ebene liegen, die senkrecht zu den genannten Oberflächen und durch die Fugenachse läuft, und die symmetrisch in bezug auf eine Achse angeordnet sind, die senkrecht auf den genannten Oberflächen steht und in dieser Ebene enthalten ist.

19. Vorrichtung nach Anspruch 15, dadurch gekennzeichnet, dass sie weiterhin Signalverarbeitungseinrichtungen für die Verarbeitung der Signale aufweist, die von der ersten Sonde (114') geliefert werden und die ein Näherungssignal (V$_{ph2'}$) abgeben, das mit der Distanz (h) variiert, das die Sonde von der gegenüberstehenden Oberfläche trennt, und dass sie Einrichtungen zum lateralen Verschieben der ersten Sonde (114') mit dem genannten Glied (16) in Abhängigkeit von Änderungen des Positionierungssignals (V$_{ph1}$) enthält, das von der zweiten Sonde geliefert wird, um die erste Sonde in der Fugenachse zu zentrieren, und dass die Unterbrechungsdetektoreinrichtungen (89) auf das Näherungssignal (V$_{ph2'}$) ansprechen, um das Signal (V$_{ps}$) der Anwesenheit einer Unterbrechung von den Änderungen des Näherungssignals ausgehend abzugeben.

20. Vorrichtung nach Anspruch 15, dadurch gekennzeichnet, dass die Unterbrechungsdetektoreinrichtungen (89) Subtraktionseinrichtungen (120) aufweisen, die die Differenz zwischen den Positionierungssignalen (V$_{ph1}$, V$_{ph2}$) ermitteln, die von den Signalverarbeitungseinrichtungen (88, 88') zur Verarbeitung der von der ersten Sonde (114) und der zweiten Sonde (10) gelieferten Signale abgegeben werden, und Vergleichseinrichtungen (122) zum Vergleichen dieser Differenz mit einem vorbestimmten Schwellenwert aufweist, wobei letztgenannte Einrichtungen das Signal (V$_{ps}$) der Anwesenheit einer Unterbrechung abgeben, wenn die genannte Differenz über dem Schwellenwert liegt.

21. Vorrichtung nach einem der Ansprüche 13 bis 20, dadurch gekennzeichnet, dass sie weiterhin Bahnberechnungseinrichtung (106, 108, 110, 112) aufweist, die auf Änderungen des Positionierungssignals (V$_{ph}$) vor und nach der Abgabe eines Signals (V$_{ps}$) der Anwesenheit einer Unterbrechung durch die Unterbrechungsdetektoreinrichtungen (89) anspricht, um ein Positionierungssignal (V$_{ph}$) abzugeben, und die weiterhin auf das berechnete Positionierungssignal (V$_{ce}$) anspricht, um in entsprechender Abhängigkeit vom einen oder vom anderen dieser Signale ein Befehlssignal (T$_c$) abzugeben, je nachdem, ob ein Signal der Anwesenheit einer Unterbrechung von der Unterbrechungsdetektoreinrichtung abgegeben wird, oder nicht.

22. Vorrichtung nach Anspruch 21, dadurch gekennzeichnet, dass die Bahnberechnungseinrichtung eine erste Speichereinrichtung (106) für die Änderungen des Positionierungssignals (V$_{ph}$) während einer Periode, die vor der Abgabe eines Signals (V$_{ps}$) der Anwesenheit einer Unterbrechung gegeben ist, eine zweite Speichereinrichtung (110) für Veränderungen des Positionierungssignals während der gleichen Zeitperiode nach dem Ende der Abgabe eines Signals der Anwesenheit einer Unterbrechung, eine Extrapolationseinrichtung (108), die einen ersten Teil (V$_{ce(1)}$) des Positionierungssignals, das von den in der ersten Speichereinrichtung (106) eingespeicherten Änderungen ausgehend berechnet ist, und eine Interpolationseinrichtung (112) aufweist, die einen zweiten Teil (V$_{ce(2)}$) des Positionierungssignals bestimmt, das von den in den ersten und zweiten Speichereinrichtungen (106, 110) eingespeicherten Änderungen ausgehend berechnet ist.

23. Vorrichtung nach einem der Ansprüche 15 bis 20, dadurch gekennzeichnet, dass sie darüberhinaus aufweist: eine Blockiereinrichtung (116), eine Einrichtung (92) zum lateralen Verschieben des genannten Gliedes in Abhängigkeit von Änderungen des Positionierungssignals (V$_{ph1}$), wobei die Blockiereinrichtung auf das Signal (V$_{ps}$) der Anwesenheit einer Unterbrechung anspricht, das von der Unterbrechungsdetektoreinrichtung (89) abgegeben wird, um die laterale Verschiebung des genannten Gliedes zu sperren.

24. Vorrichtung nach Anspruch 23, dadurch gekennzeichnet, dass sie darüberhinaus eine Verzögerungseinrichtung (118) aufweist, die der Blockiereinrichtung (116) zugeordnet ist, um die laterale Verschiebung des genannten Gliedes mit einer vorbestimmten Verzögerung zu sperren.

25. Vorrichtung nach Anspruch 23, dadurch gekennzeichnet, dass sie darüberhinaus eine Recheneinrichtung (118') aufweist, die der Blockiereinrichtung (116) zugeordnet ist, um die laterale Verschiebung des genannten Gliedes mit einer vorbestimmten Verzögerung zu sperren, die von der Verschiebegeschwindigkeit der Sonden (114, 10) längs der Fuge und von der diese Sonden trennenden Distanz ausgehend bestimmt ist.

26. Vorrichtung nach einem der Ansprüche 13 bis 25, dadurch gekennzeichnet, dass die Phasenverschiebung eine Grösse von $\frac{\pi}{2}$ hat.

## Claims

1. Process for lateral positioning of a member (16) with respect to a joint (18) formed between two metal surfaces (12a, 14a) exhibiting discontinuities (19), utilizing at least one Foucault current sensor (10, 114) the signals delivered by each sensor being processed to provide at least one position signal ($V_{ph}$, $V_{ph1}$, $V_{ph2}$) varying with the distance (D) between the axis (x) of the corresponding sensor and the axis of the joint, said position signal being a function of the phase difference between an input signal to the sensor and the signal ($V_b$) at its outputs, said member being laterally displaced as a function of variations in the position signal ($V_{ph}$, $V_{ph1}$), characterized in that said position signal ($V_{ph}$, $V_{ph1}$) is formed by adding the signal ($V_b$) at the sensor outputs to a signal ($V_0$) phase-shifted by $\varphi$ with respect to said input signal, then comparing the phase of the signal ($V_c$) thus obtainted to the input signal in a phase discriminator (58) formed such that, when the inputs are phase-shifted by $\varphi$, its output is 0, and in that the signals delivered by each sensor are processed to obtain at least one signal ($V_{ps}$) indicating presence of a discontinuity emitted when the corresponding sensor faces a discontinuity (19) in the joint, and in that displacement of the said member is interrupted as a function of variations of the position signal when a discontinuity signal ($V_{ps}$) is emitted.

2. Process according to Claim 1, characterized in that a single Foucault current sensor (10) is employed, and in that the discontinuity signal ($V_{ps}$) is emitted between two characteristic variations in the position signal ($V_{ph}$).

3. Process according to Claim 1, characterized in that at least two Foucault current sensors (10, 114, 114') separated lengthwise of the joint, are employed.

4. Process according to Claim 3, characterized in that the discontinuity signal ($V_{ps}$) is emitted between two characteristic variations of the position signal ($V_{ph2}$) of the first sensor (114), lateral displacement of said member (16) being controlled as a function of variations in the position signal ($V_{ph1}$) of the second sensor (10).

5. Process according to Claim 3, characterized in that the signals delivered by the first sensor (114') are processed to obtain a proximity signal ($V_{ph2}$), which varies with the distance (h) between the sensor and its facing surface, and in that the first sensor (114') is laterally displaced with said member as a function of variation of the position signal provided by the second probe ($V_{ph1}$) whereby to centre the first sensor on the axis of the joint and in that the discontinuity signal ($V_{ps}$) is emitted from variations in the proximity signal ($V_{ph2'}$).

6. Process according to Claim 3, characterized in that the discontinuity signal ($V_{ps}$) is emitted when the difference between the position signals ($V_{ph1}$, $V_{ph2}$) obtained from each sensor (10, 114) exceeds a predetermined threshold.

7. Process according to any one of the preceding Claims, characterized in that a calcalculated position signal ($V_{ce}$) is determined from variations in the position signal ($V_{ph}$) before and after emission of a discontinuity signal, and in that lateral displacement of said member is controlled from a command signal ($T_c$) as a function of the position signal ($V_{ph}$) and the absence of a discontinuity signal, and as a function of the calculated position signal ($V_{ce}$) when a discontinuity signal ($V_{ps}$) is emitted.

8. Process according to Claim 7, characterized in that the calculated position signal ($V_{ce}$) is determined in a first time period from variations in the position signal ($V_{ph}$) during a given period before emission of a discontinuity signal ($V_{ps}$) and in a second time period from variations in the position signal during the same period after end of emission of a discontinuity signal.

9. Process according to any one of Claims 3 to 6, characterized in that displacement of the said member is directly controlled by means of the position signal ($V_{ph1}$) and the absence of a discontinuity signal ($V_{ps}$) and in that displacement is blocked with a predetermined delay after start of emission of a discontinuity signal.

10. Process according to Claim 9, characterized in that the delay is adjustably preset (118).

11. Process according to Claim 9, characterized in that the delay is determined from the speed of displacement of the sensors lengthways of the joint, and the distance separating said sensors.

12. Process according to any one of Claims 1 to 11, characterized in that the phase-shift $\varphi$ has a value of $\frac{\pi}{2}$.

13. Apparatus for laterally positioning a member (16) with respect to a joint (18) formed between two metal surfaces (12a, 14a) and having discontinuities (16), comprising at least one Foucault current sensor (10, 114), treatment means (88, 88') for signals delivered by each of the sensors emitting at least one position signal ($V_{ph}$, $V_{ph1}$, $V_{ph2}$), varying with the distance (D) from the axis of the joint, said position signal being a function of the phase difference between an input signal to said sensor and the signal ($V_b$) at its outputs, and means (92, $N_2$) for lateral displacement of said member as a function of the variations in the position signal, characterized in that the treatment means comprise means (48) for adding a signal ($V_b$) at the outputs of the sensor to a signal ($V_0$) phase shifted by $\varphi$ with respect to said input signal, and a phase discriminator (58) sensitive to said signal ($V_c$) thereby obtained and the input signal, to deliver an output signal ($V_{ph}$, $V_{ph1}$) which is cancelled when the inputs are phase-shifted by $\varphi$, the device additionally comprises discontinuity detection means (89) emitting at least one discontinuity signal ($V_{ps}$) when the corresponding sensor faces a discontinuity in the joint, and means (91, 116) to interrupt command of the lateral displacement means (92) of said member, as a function of variations in the position signal when a discontinuity signal is emitted by the discontinuity-detection means (89).

14. Apparatus according to Claim 13, characterized in that it comprises a single Foucault current sensor (10) having two coils ($B_1$, $B_2$) symmetrically disposed with respect to an axis (a) contained in a plane normal to said surfaces and passing through the axis of the joint, and in that the discontinuity-detection means (89) are sensitive to a position signal ($V_{ph}$) emitted by the treatment means (88) and emit the discontinuity signal ($V_{ps}$) between two characteristic variations of the position signal.

15. Apparatus according to Claim 13, characterized in that it comprises at least two Foucault current sensors (10, 114) separated lengthwise of the joint to define a first discontinuity-detection sensor (114) and a second lateral-positioning sensor (10), the second sensor comprising two coils ($B_1$, $B_2$) symmetrically disposed with respect to an axis (a) contained in a plane normal to said surfaces and passing through the axis of the joint.

16. Apparatus according to Claim 15, characterized in that the discontinuity-detection means (89) are sensitive to a position signal ($V_{ph2}$) emitted by the treatment means (88') for signals delivered by the first sensor (114) and emit the discontinuity signal ($V_{ps}$) between two characteristic variations of the position signal.

17. Apparatus according to Claim 16, characterized in that the first sensor (114) comprises two coils symmetrically disposed with respect to a plane normal to said surfaces and passing through the axis of the joint.

18. Apparatus according to Claim 16, characterized in that the first sensor (114) comprises two coils contained in a plane normal to said surfaces and passing through the axis of the joint and symmetrically disposed with respect to an axis normal to said surfaces and contained within said plane.

19. Apparatus according to Claim 15, characterized in that it additionally comprises treatment means for signals delivered by the first sensor (114') emitting a proximity signal ($V_{ph2'}$) which varies with the distance (h) separating the sensor from its facing surface, and means for laterally displacing the first sensor (114') with said member (16) as a function of variations in the position signal ($V_{ph1}$) provided by the second sensor whereby to centre the first sensor on the axis of the joint, and in that the discontinuity-detection means (89) are sensitive to a proximity signal ($V_{ph2'}$) and emit the discontinuity signal ($V_{ps}$) from variations in said proximity signal.

20. Apparatus according to Claim 15, characterized in that the discontinuity-detection means (89) comprise subtractor means (120) determining the difference between the position signals ($V_{ph1}$, $V_{ph2}$) emitted by the treatment means (88, 88') for signals delivered by the first sensor (114) and the second sensor (10), and comparator means (122) comparing said difference with a predetermined threshold, said latter means emitting the discontinuity signal ($V_{ps}$) when said difference is greater than said threshold.

21. Apparatus according to any one of Claims 13 to 20, characterized in that it additionally comprises path-calculation means (106, 108, 110, 112) sensitive to variations in the position signal ($V_{ph}$) before and after emission of a discontinuity signal ($V_{ps}$) by the discontinuity detection means (89) and emitting a position signal ($V_{ph}$) and to the calculated position signal ($V_{ce}$) and emitting a command signal ($T_c$) controlled by one or other of said signals according to whether a discontinuity signal is or is not emitted by the discontinuity-detection means.

22. Apparatus according to Claim 21, characterized in that the path-calculation means comprise first memory means (106) for variations in the position signal ($V_{ph}$) during a given period before emission of a discontinuity signal ($V_{ps}$), second memory means (110) for variations in the position signal during the same period after the end of emission of a discontinuity signal, extrapolation means (108) determining a first part ($V_{ce(1)}$) of the calculated position signal from variations recorded in the first memory means (106) and interpolation means (112) determining a second part ($V_{ce(2)}$) of the calculated position signal from variations recorded in the first and second memory means (106, 110).

23. Apparatus according to any one of Claims 15 to 20, characterized in that it additionally comprises blocking means (116), means (92) for laterally displacing said member as a function of variations in the position signal ($V_{ph1}$), said blocking means being sensitive to a discontinuity signal ($V_{ps}$) emitted by the discontinuity-detection means (89) to block lateral displacement of said member.

24. Apparatus according to Claim 23, characterized in that it additionally comprises delay means (118) associated with the blocking means (116) for blocking lateral displacement of said member with a predetermined delay.

25. Apparatus according to Claim 23, characterized, in that it additionally comprises calculating means (118') associated with the blocking means (116) for blocking lateral displacement of said member with a delay determined from the speed of displacement of the sensors (114, 10) lengthwise of the joint and the distance separating said sensors.

26. Apparatus according to any one of Claims 13 to 25, characterized in that the phase shift has a value of $\frac{\pi}{2}$.

FIG. 1

2/8

FIG. 2

FIG. 6

FIG. 3

FIG. 4

FIG. 5

.4 / 8

FIG. 7

FIG. 8

FIG. 9

FIG. 10

25

FIG. 11

FIG. 12

FIG. 13

FIG. 14

FIG. 15

FIG. 16

FIG. 17